# EUROPÄISCHE PATENTSCHRIFT

(11) **EP 2 674 030 B1**
(45) Veröffentlichungstag und Bekanntmachung des Hinweises auf die Patenterteilung: **06.03.2024**
(21) Anmeldenummer: 13164091.4
(22) Anmeldetag: 17.04.2013
(51) Int. Cl.: A01K 31/16, B65G 15/58

(54) **EIERBAND**
EGG BELT
TAPIS À OEUFS

(30) Priorität: 03.05.2012 DE 202012004330 U
(43) Veröffentlichungstag der Anmeldung: 18.12.2013
(73) Patentinhaber: Big Dutchman International GmbH, 49377 Vechta (DE)
(72) Erfinder: MÖLLER, Günter, 49632 Essen (DE)
(74) Vertreter: Eisenführ Speiser

(56) Entgegenhaltungen:
- DE-C- 603 231
- DE-U- 1 820 785
- FR-A1- 2 738 638
- GB-A- 647 498
- GB-A- 1 092 058
- KR-A- 20030 062 080
- US-A- 2 096 105
- US-A- 3 898 435
- US-A- 4 860 569

## Beschreibung

Die Erfindung betrifft ein Eierband umfassend ein sich in einer Förderrichtung erstreckendes Band zum Fördern von Eiern in einer Förderrichtung und einer Vielzahl von Ausnehmungen.

Eierbänder werden in der Eierproduktion zum Transport von Eiern in einer Förderrichtung eingesetzt, beispielsweise beim Transport von Legehennenkäfigen zu Verpackungsstationen. Eierbänder sind oft Endlosbänder, die eine Haupterstreckungsrichtung haben, die mit der Förderrichtung übereinstimmt. Parallel zur Haupterstreckungsrichtung oder Förderrichtung ist ein Eierband von zwei Kanten oder Rändern begrenzt, ebenso wie quer zur Haupterstreckungsrichtung oder Förderrichtung durch zwei Kanten oder Enden. Eierbänder können in verschiedenen Fördersystemen eingesetzt und durch verschiedene Mittel angetrieben werden, um Eier in der Förderrichtung zu transportieren.

Neben Eiern gelangen oft auch Kotreste, Federn oder andere Verschmutzungen, wie beispielsweise Staub, auf das Band, lagern sich dort an und werden auf die Eier übertragen, so dass auch die Eier verschmutzt werden.

Neben einer gewollten Bewegung der Eier zusammen mit dem Eierband in eine Förderrichtung findet oft auch eine Bewegung der Eier relativ zu dem Band statt, insbesondere Rollbewegungen vor oder zurück, d.h. in Förderrichtung oder entgegengesetzt, seitlich oder kombinierte Bewegungen hieraus. Solche Bewegungen der Eier relativ zum Band können zu Beschädigungen der Eier und zu verstärkter Schmutzübertragung vom Band auf die Eier führen und sind daher nicht gewünscht.

Das Dokument US 3,898,435 offenbart eine Fördervorrichtung mit untereinander verbundenen Eierträgern mit zwei gelenkig gelagerten Elementen, die ein Ei in Form eines Greifers halten und die gezielt aufgeschwenkt werden können, um das darin gehaltene Ei freizugeben. Das Dokument US 2,096,105 offenbart eine Fördervorrichtung beispielswiese für Früchte mit hintereinander angeordneten Förderelementen, die in Querschnitt dreiecksförmig ausgebildet sind. Das Dokument GB 647,498 offenbart eine Vorrichtung zum Sortieren von Produkten wie beispielsweise Früchten oder Eiern, bei der die Produkte mittels Schwerkraft und elektrischer Energie nach Gewicht sortiert werden. Auf einem anderen Anwendungsgebiet als der Eierförderung, nämlich im Produktionsumfeld für Dosen und Dosendeckel, offenbart die US 4,860,569 beispielsweise eine Fördervorrichtung, die ein Förderband aus einem Metallblech aufweist.

Das Dokument KR 2003 0062080 A offenbart ein automatisches Nest, aus dem Eier abgeführt werden.

Das Dokument GB 1 092 058 A offenbart einen Nestkasten, der einen Rahmen umfasst, der Platten trägt, um eine im wesentlichen dunkle Einfassung zu bilden, zu der Zugang durch einen Eingangstunnel erhalten wird, wobei ein mit Öffnungen versehener falscher Boden in dem Nestkasten vorgesehen ist, so dass Eier in einen Sammelkanal rollen, der mit einem angelenkten Deckel versehen ist. Ein Streifen aus flexiblem Material, z.B. Gummi trennt den Kanal vom Hauptgehäuse und ist durch die Eier verschiebbar. In einer Abwandlung rollen die Eier auf ein Förderband, das sich über die Länge des Nestkastens erstreckt.

Das Dokument FR 2 738 638 A1 offenbart eine Vorrichtung zur Durchleuchtung und gleichzeitigen Kalibrierung von Elementen oder Eiern. Die Vorrichtung enthält eine Videokamera, die über einem Förderband angeordnet ist und eine Anzahl von zentralen Löchern aufweist, in denen Eier positioniert sind. Eine Lichtquelle erzeugt einen Strahl, der die Eier beleuchtet. Das durch jedes Ei übertragene Licht wird von der Kamera gesammelt und von einem Verarbeitungsmodul analysiert, das den Zustand und die Größe des Eies bestimmt. Das Verarbeitungsmodul steuert mechanische und elektronische Mittel, die die Eier sortieren.

Das Dokument DE 18 20 785 U offenbart ein Transportband bzw. einen Treibriemen, der aus mehreren miteinander verklebten oder verschweißten Schichten aus Kunststoffmaterial mit mindestens einer Schicht aus Kunststoff-Fasergewebe besteht, und dessen Oberfläche mindestens auf einer Seite zur Erhöhung der Reibung bzw. Haftung in besonderer Weise präpariert ist

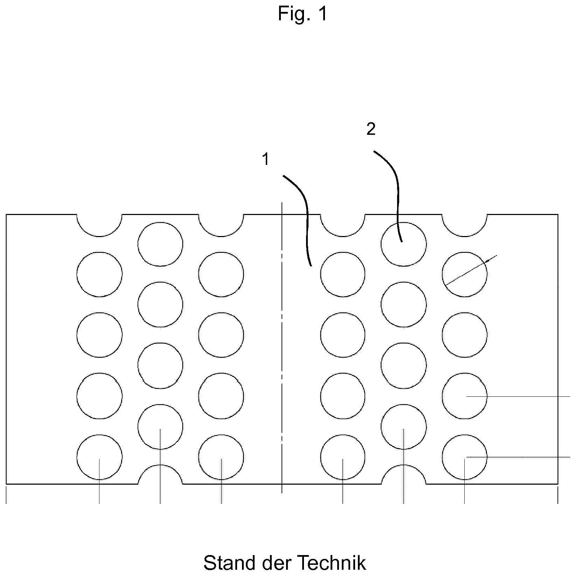

Bei existierenden Eierbändern ist eine Vielzahl von Ausnehmungen im Band vorgesehen, wodurch zum einen Schutz durchfallen soll und zum anderen Rollbewegungen der Eier reduziert werden sollen. Ein Abschnitt eines bekannten Eierbands mit einer Vielzahl von kreisförmigen Ausnehmungen ist in Figur 1 dargestellt. Ferner sind auch Eierbänder mit quadratischen Ausnehmungen bekannt.

Es ist eine Aufgabe der vorliegenden Erfindung, ein verbessertes Eierband bereitzustellen, insbesondere ein Eierband, bei dem die Eier weniger stark verschmutzt werden.

Diese Aufgabe wird gelöst durch ein Eierband nach Anspruch 1.

Die erfindungsgemäße Ausgestaltung der Ausnehmungen als Dreiecke hat gegenüber dem im Stand der Technik bekannten Ausnehmungen der Eierbänder mehrere Vorteile.

Ein erster Vorteil ist, dass bei der erfindungsgemäßen Ausbildung des Eierbands mit dreieckigen Ausnehmungen bzw. Löchern ein Ei mit einem Abschnitt seiner Oberfläche in eine solche dreiecksförmige Ausnehmung eintaucht und dabei an drei Punkten, also jeweils einem Punkt pro Dreiecksseite, durch das Band gelagert wird. Diese Dreipunktlagerung der Eier auf dem Eierband ist deutlich stabiler als bei einer Lagerung in kreisförmigen, quadratischen oder rechteckigen Ausnehmungen. Auf diese Weise kann mit dem erfindungsgemäßen Eierband eine Relativbewegung zwischen den Eiern und dem Band weiter reduziert werden.

Insbesondere gegenüber runden Ausnehmungen haben die dreiecksförmigen Ausnehmungen der Erfindung den weiteren Vorteil, dass ringförmige Verschmutzungen an den Eiern vermieden werden können. Solche ringförmigen Verschmutzungen sind besonders auffällig und daher nachteilig. Durch die dreieckige Ausbildung der Ausnehmungen liegt ein Ei vorzugsweise unabhängig von seiner Ausrichtung immer nur mit drei Stellen auf dem Eierband auf, d. h. pro Seitenfläche einer dreiecksförmigen Ausnehmung gibt es eine Kontaktstelle mit dem Ei. Auf diese Weise entstehen nur punktförmige Verschmutzungsstellen anstelle von kreisrunden Verschmutzungsringen.

Gegenüber bekannten Eierbändern mit quadratischen Ausnehmungen hat die Ausgestaltung mit dreieckigen Ausnehmungen ferner den Vorteil, dass eine höhere Stabilität des Eierbands gegeben ist, insbesondere bei Zugbelastungen des Eierbands in Förderrichtung und Scherbeanspruchungen in der Förderbandebene, die bei Zugbelastungen nicht parallel zur Förderrichtung sondern in einem Winkel hierzu auftreten. Bei Bändern mit quadratischen oder rechteckigen Ausnehmungen bzw. Löchern kann der Effekt auftreten, dass sich die Quadrate bzw. Rechtecke zu Parallelogrammen verziehen und dieser Verformung wenig Widerstand durch die Eierbandstruktur entgegengesetzt wird. Bei der erfindungsgemäßen Ausbildung der Ausnehmungen in Form von Dreiecken besteht gegenüber solchen Zug- und Scherbeanspruchungen eine deutlich höhere Stabilität.

Mit dem erfindungsgemäßen Eierband kann die Verschmutzung der Eier somit deutlich reduziert werden, da gegenüber einer ringförmigen oder mindestens 4-Punkt-förmigen Lagerung des Eies bei der erfindungsgemäßen 3-Punkt-Lagerung nur eine minimale Anzahl an erforderlichen Kontaktpunkten zwischen dem Ei und dem Eierband besteht und somit die über die Kontaktstellen erfolgende Schmutzübertragung vom Eierband auf das Ei gegenüber existierenden Bändern reduziert ist. Ferner weist das erfindungsgemäße Eierband eine höhere Stabilität gegenüber Zug- und Scherbeanspruchungen auf.

Insbesondere kann auch gegenüber einer Ausgestaltung mit runden Ausnehmungen bei erfindungsgemäßen Eierband ein höherer Lochanteil pro Bandabschnitt, d. h. eine minimierte Oberfläche, realisiert werden, so dass sich Schmutz oder Staub nur noch auf der restlichen bzw. minimierten Oberfläche ablagern kann und sich daher insgesamt auf einem erfindungsgemäßen Eierband weniger Schmutz befindet. Auch dies trägt zu einer geringeren Verschmutzung der Eier bei.

Die Ausnehmungen bzw. Löcher in dem Band sind vorzugsweise in einem regelmäßigen Muster angeordnet. Auf diese Weise kann die Stabilität des Bandes weiter erhöht werden.

Ferner ist es bevorzugt, dass die Ausnehmungen als gleichschenklige Dreiecke ausgebildet sind. Auch diese Fortbildungsform hat den Vorteil einer besonders hohen Stabilität des Eierbands und einer verbesserten Lagerung der Eier gegenüber bekannten Eierbändern.

Insbesondere können die dreiecksförmigen Ausnehmungen abgerundete Ecken aufweisen. Dies hat den Vorteil, dass sich in den Ecken der Dreiecke weniger Schmutz absetzen kann und daher die Verschmutzung der Eier weiter reduziert werden kann.

In einer besonders bevorzugten Ausführungsform umschreiben die dreiecksförmigen Ausnehmungen jeweils einen Kreis mit einem Durchmesser von 15 bis 25 mm insbesondere 20 mm.

Bei einer solchen Ausgestaltung der Dreiecke kann erreicht werden, dass die Eier in den Ausnehmungen ähnlich tief einsinken wie in bekannten Eierbändern mit kreisförmigen Ausnehmungen, d. h. das Ei taucht ähnlich tief durch das Band durch wie bei herkömmlichen Eierbändern. Gleichzeitig ist jedoch eine dreiecksförmige Ausnehmung, die einen Kreis mit einem bestimmten Durchmesser umschreibt, größer als die entsprechende kreisförmige Ausnehmung mit dem gleichen Durchmesser. Durch diese größeren dreiecksförmigen Ausnehmungen kann somit auch mehr Schmutz hindurchfallen als durch die kleineren kreisförmigen Ausnehmungen. Auf diese Weise kann die Oberfläche gegenüber bekannten Eierbändern weiter reduziert werden, so dass sich weniger Schmutz und Staub auf dem Eierband anlagern kann und die Verschmutzung der Eier reduziert wird, während gleichzeitig sichergestellt ist, dass die Eier nicht zu tief durch das Band durchhängen.

In der bevorzugten Ausführungsform ist die Größe der Dreiecke so gewählt, dass ein Ei unabhängig von seiner Orientierung jeweils nur an drei Stellen mit dem Eierband in Berührung kommt, insbesondere jeweils mit einer Stelle einer Seitenwand eines Dreiecks. Die Unabhängigkeit von der Ausrichtung des Eies ergibt sich dadurch, dass das Ei sowohl mit seinem oberen oder unteren Ende, den "Polen", als auch mit dem Bereich des größten Umfangs dazwischen, seinem "Äquator", so in bzw. auf einer Ausnehmung zu liegen kommt, dass drei Kontaktstellen zwischen Ei und Eierband entstehen.

In einer weiteren Ausführungsform ist bevorzugt, dass jeweils eine Seite einer Ausnehmung parallel zur Förderrichtung ausgerichtet ist, wobei vorzugswese die jeweils anderen beiden Seiten einer Ausnehmung in einem Winkel von 60° bzw. 120° zur Förderrichtung ausgerichtet sind.

Erfindungsgemäß sind die dreiecksförmigen Ausnehmungen in zwei oder mehreren, sich in Förderrichtung erstreckenden Reihen angeordnet.

Auf diese Weise ergibt sich eine besonders vorteilhafte, gleichmäßige Anordnung der Dreiecke, mit der insbesondere Eierbänder unterschiedlicher Breite leicht zu herzustellen sind. Insbesondere ist dabei bevorzugt, dass ein Eierband eine Breite aufweist, die einem Vielfachen der Breite einer solchen Reihe entspricht, ggf. zuzüglich von einer oder zwei Randbreiten an den sich in Förderrichtung erstreckenden Kanten des Eierbands.

Vorzugsweise sind die dreiecksförmigen Ausnehmungen einer Reihe abwechselnd um 60° gedreht angeordnet. Auf diese Weise sind vorzugsweise abwechselnd die in Förderrichtung rechten und linken Seiten der Dreiecke einer Reihe parallel zur Förderrichtung ausgerichtet. Auch diese Ausrichtung wirkt sich positiv auf die Stabilität des Eierbands aus.

Ferner ist bevorzugt, dass die Reihen durch sich in Förderrichtung erstreckende Stege voneinander beabstandet sind, wobei die Stege vorzugsweise eine Breite von weniger als 10 Millimeter haben, insbesondere eine Breite von 5 Millimetern.

Solche Stege zwischen den Reihen der Ausnehmungen ermöglichen, dass beispielsweise ein Eierband leicht durch einen Schnitt in Förderrichtung etwa in der Mitte eines solchen Steges zu trennen ist, um Eierbänder unterschiedlicher Breite zu erhalten oder die Breite eines Eierbands zu verringern. Wenn ein Eierband nicht geteilt oder abgeschnitten werden soll, ist eine besonders schmale Ausbildung der Stege, beispielsweise von 5 Millimetern bevorzugt, um die Eierbandoberfläche, auf der sich Schmutz und Staub ablagern kann, gering zu halten.

Erfindungsgemäß sind die dreiecksförmigen Ausnehmungen einer Reihe, durch Stege voneinander getrennt, die zur Förderrichtung in einem Winkel von 60° oder 120° ausgerichtet sind, wobei die Stege vorzugsweise eine Breite von weniger als 10 Millimeter haben, insbesondere eine Breite von 5 Millimetern.

Auch zwischen den dreiecksförmigen Ausnehmungen, insbesondere innerhalb einer Reihe, sind vorzugsweise Stege vorgesehen. Diese Stege sind vorzugsweise ebenfalls schmal, beispielsweise mit einer Breite von 5 Millimetern, um die Eierbandoberfläche minimiert zu halten und damit Verschmutzungsmöglichkeiten zu reduzieren. Insbesondere in Kombination mit einer der oben genannten Ausrichtungen der Ausnehmungen ist es bevorzugt, dass die Stege zur Förderrichtung einen Winkel von 60° oder 120° bilden.

Durch die unterschiedliche Ausrichtung der Dreiecke ergibt sich somit ein Netz von Stegen, das vorzugsweise aus in Förderrichtung verlaufenden Stegen zwischen den Reihen der Ausnehmungen sowie in den Reihen durch abwechselnd mit einem Winkel von 60° oder einem Winkel von 120° zur Förderrichtung angeordneten Stegen gebildet ist. Durch ein solches bevorzugtes Netz von Stegen ergibt sich eine besonders hohe Stabilität des Eierbands gegenüber Zug- oder Scherbelastungen.

Erfindungsgemäß weist das Eierband einen oder mehrere Bereiche ohne Ausnehmungen auf. Hierunter ist zu verstehen, dass neben den Stegen, die einzelne Ausnehmungen voneinander trennen, größere Bereiche des Bandes ohne Ausnehmungen ausgebildet sind.

Bevorzugt ist beispielsweise, dass eine mittlerer, streifenförmiger Bereich, der sich in Förderrichtung erstreckt, ohne Ausnehmungen ausgebildet ist, wobei vorzugsweise der mittlere Bereich eine Breite aufweist, die der Breite von einer, zwei oder mehreren Reihen von Ausnehmungen entspricht.

Insbesondere bei Eierbändern mit einer großen Breite, insbesondere mit einer Anzahl von drei oder mehr Reihen von Ausnehmungen, ist ein solcher Bereich ohne Ausnehmungen bevorzugt, um die Stabilität des Eierbands weiter zu erhöhen. Ein solcher Streifen ohne Ausnehmungen kann auch dazu verwendet werden, das Eierband in Förderrichtung zu zerteilen. Produktionstechnisch gesehen ist die Ausbildung des Streifens mit einer Breite von einer, zwei oder mehreren Reihen von Ausnehmungen vorteilhaft, da in der Produktion diese Reihen einfach ohne Ausnehmungen produziert werden können, die Breiten der Eierbänder jedoch im Wesentlichen gleich sind, unabhängig davon, ob mittlere Reihen mit oder ohne Ausnehmungen produziert werden.

Erfindungsgemäß ist bzw. sind einer oder beide der sich in Förderrichtung erstreckenden Ränder des Bandes ohne Ausnehmungen ausgebildet.

Die Ausbildung eines durchgehenden Randes an einer sich in Förderrichtung erstreckenden Kante des Eierbands ist bevorzugt, beispielsweise zur Befestigung oder zum Antrieb des Bandes. Besonders bevorzugt ist die Ausbildung eines solchen Randes an beiden sich in Förderrichtung erstreckenden Kanten des Eierbands.

Insbesondere ist dabei jedoch bevorzugt, dass der Rand bzw. die Ränder ohne Ausnehmungen eine Breite aufweist bzw. aufweisen, die kleiner ist als eine Seitenlänge einer dreiecksförmigen Ausnehmung.

Insbesondere ist bevorzugt, dass der Rand bzw. die Ränder ohne Ausnehmungen eine Breite aufweist bzw. aufweisen, die kleiner ist als die Breite eines Streifens von Ausnehmungen, insbesondere kleiner als die Hälfte der Breite eines solchen Streifens. Ferner ist bevorzugt, dass der Rand bzw. die Ränder ohne Ausnehmungen eine Breite aufweist bzw. aufweisen, die kleiner ist als die Hälfte einer Länge einer Seite einer dreiecksfömigen Ausnehmung. Besonders ist bevorzugt, dass die Breite des Randes bzw. der Ränder kleiner ist als 15 Millimeter, besonders bevorzugt ist eine Breite von 10 Millimetern.

In einer besonders bevorzugten Ausführungsform kann ein Eierband gefertigt werden, indem die Reihen mit dreiecksförmigen Ausnehmungen von einer sich in Förderrichtung erstreckenden Mittellinie aus so weit nach links und rechts angeordnet werden, dass sich rechts und links jeweils ein Rand ohne Ausnehmungen mit einer bestimmten Breite, insbesondere einer Breite von 10 Millimetern, ergibt. Dabei kann ein mittlerer, streifenförmiger, sich in Förderrichtung erstreckender Bereich ohne Ausnehmungen ergeben, dessen Breite sich ergibt ausgehend von der Gesamtbreite des Eierbands abzüglich der Breite der beiden Ränder und abzüglich der Breite der insgesamt rechts und links vorgesehenen Reihen mit Ausnehmungen.

Eine solche schmale Ausbildung des Randbereichs bzw. der Randbereiche hat den Vorteil, dass ein quer zur Förderrichtung auf das Eierband, beispielsweise aus einem Käfig, rollendes Ei schnell eine der dreiecksförmigen Ausnehmungen erreicht und dadurch nur über die möglichst schmale Breite des Randbereichs mit dem Eierband in Berührung kommt. Weniger Kontakt mit dem Eierband resultiert vorteilhafter Weise in geringeren Verschmutzungen der Eier.

Ferner hat ein schmaler Randbereich den Vorteil, dass beispielsweise aus den Käfigen auf das Eierband gelangende Verschmutzungen, wie beispielsweise Kot oder Federn, schnell den dreiecksförmigen Ausnehmungen zugeführt werden und durch diese Ausnehmungen durchfallen können, so dass insgesamt weniger Schmutz auf dem Eierband verbleibt.

Vorzugsweise weist ferner mindestens ein Ende des Bandes eine Kante auf, die zur Förderrichtung einen Winkel von 60° oder 120° ausgerichtet ist.

Üblicherweise werden Eierbänder getrennt durch einen Schnitt quer bzw. orthogonal zur Förderrichtung. Insbesondere in Kombination mit einer der oben genannten Ausrichtungen der dreieckigen Ausnehmungen ist jedoch bevorzugt, dass ein oder beide Enden des Bandes nicht einen Winkel von 90° zur Förderrichtung, sondern einen Winkel von 60° oder 120° zur Förderrichtung aufweisen. Dadurch kann erreicht werden, dass diese Kanten zumindest abschnittsweise im Bereich der vorzugsweise mit einem Winkel von 60° oder 120° zur Förderrichtung ausgerichteten Stege zwischen den Ausnehmungen verlaufen. Dies erleichtert die Handhabung der Enden des Eierbands, da diese dadurch kompakter ausgestaltet sind.

Besonders bevorzugt ist, dass das Eierband Kunststoff, vorzugsweise ein Thermoplast, insbesondere Polypropylen, aufweist oder daraus besteht, und/oder im Extrusionsverfahren hergestellt ist.

Das Eierband ist vorzugsweise aus einem flexiblen Material hergestellt. Besonders bevorzugt ist eine Dicke des Eierbandes von unter zwei Millimetern, insbesondere von 1,3 Millimetern oder weniger. Durch die erfindungsgemäße Ausgestaltung der Ausnehmungen als Dreiecke und ggf. weiterer Fortbildungen des Eierbandes wird die Stabilität des Eierbandes erhöht, so dass eine geringere Dicke erforderlich ist, wodurch Material und Gewicht eingespart werden können.

Bevorzugte Ausführungsformen der Erfindung werden beispielhaft anhand der beiliegenden Figuren beschrieben. Es zeigen:
- Fig. 1:: ein Eierband mit kreisrunden Ausnehmungen aus dem Stand der Technik;
- Fig. 2:: eine erste Ausführungsform eines erfindungsgemäßen Eierbands;
- Fig. 3:: eine zweite Ausführungsform eines erfindungsgemäßen Eierbands;
- Fig. 4:: eine dritte Ausführungsform eines erfindungsgemäßen Eierbands;
- Fig. 5:: eine vierte Ausführungsform eines erfindungsgemäßen Eierbands;
- Fig. 6:: Aufbauschema für konkrete Ausgestaltungen erfindungsgemäßer Eierbänder; und
- Fig. 7:: das Detail Z aus den Figuren 2 bis 6.

Fig. 1 zeigt ein Eierband 1 mit kreisrunden Ausnehmungen 2 aus dem Stand der Technik.

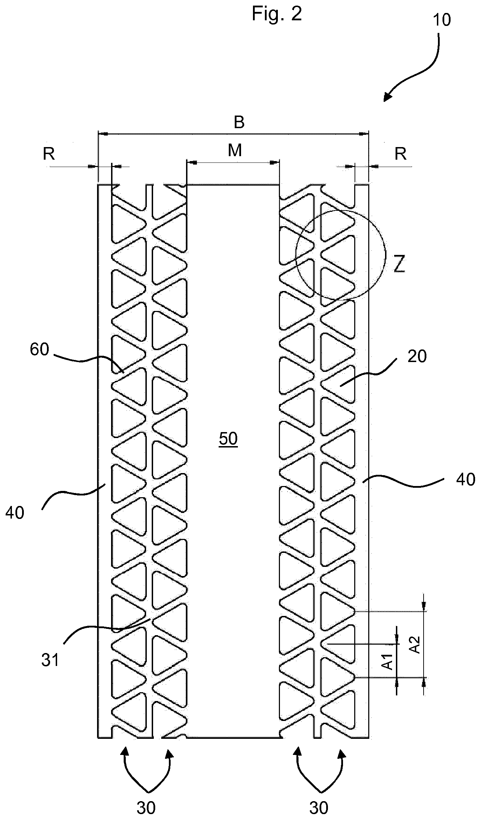

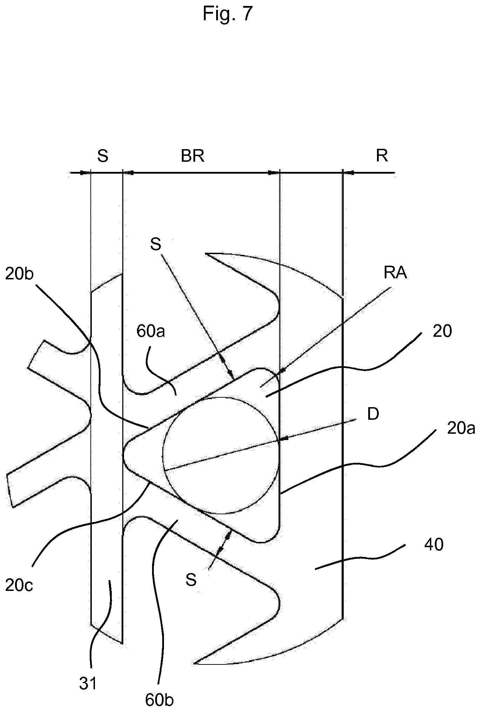

Die Figuren 2 bis 5 zeigen beispielhafte Ausführungsformen erfindungsgemäßer Eierbänder 10 in unterschiedlichen Breiten B mit unterschiedlichen mittleren Streifen M ohne Ausnehmungen. Die Eierbänder 10 weisen Ausnehmungen 20 auf, die in Reihen 30 angeordnet sind, die sich in Förderrichtung erstrecken. Die Ausnehmungen 20 einer Reihe 30 sind dabei so angeordnet, dass in einer Reihe abwechselnd um 60° gedrehte Dreiecke vorhanden sind, sodass abwechselnd die in Förderrichtung rechten und linken Seiten der Dreiecke 20 parallel zur Förderrichtung ausgerichtet sind. Die Ausnehmungen 20 sind als gleichschenklige Dreiecke ausgebildet und weisen mit einem Radius RA (Fig. 7) abgerundete Ecken auf.

Wie insbesondere in Fig. 7 zu erkennen ist, umschreiben die dreiecksförmigen Ausnehmungen 20 jeweils einen Kreis mit einem Durchmesser D, der in den in Figuren 2 bis 6 gezeigten Ausführungsbeispielen 18,5 mm beträgt. Die Ausnehmungen 20 sind derart angeordnet, dass jeweils eine Seite 20a parallel zur Förderrichtung ausgerichtet ist, eine weitere Seite 20b in einem Winkel von 60° zur Förderrichtung und die dritte Seite 20c in einem Winkel von 120° zur Förderrichtung ausgerichtet sind.

Die Reihen 30 sind durch sich in Förderrichtung erstreckende Stege 31 voneinander beabstandet, die dreiecksförmigen Ausnehmungen 20 sind ebenfalls durch Stege 60 voneinander getrennt. Von den Stegen 60 zwischen den Ausnehmungen 20 einer Reihe 30 verlaufen abwechselnd Stege 60a mit einer Ausrichtung von 60° zur Förderrichtung und Stege 60b mit einer Ausrichtung von 120° zur Förderrichtung Die Stege 31, 60 weisen vorzugsweise eine Breite S von 5 mm auf.

Die beiden sich in Förderrichtung erstreckenden Ränder 40 des Bandes sind ohne Ausnehmungen ausgebildet. Die Ränder 40 weisen eine Breite R von 10 mm auf. Die Breite BR einer Reihe 30 beträgt vorzugsweise 24,75 Millimeter.

Die Förderbänder 10 der Figuren 2 bis 6 weisen jeweils einen mittleren, streifenförmigen Bereich 50 auf, der sich in Förderrichtung erstreckt, und ohne Ausnehmungen ausgebildet ist.

Die Gesamtbreiten B des Bandes 10, die Anzahl der Reihen 30 der Ausnehmungen 20 sowie die Breite des mittleren Streifens M der Eierbänder 10 variieren in den in den Figuren 2 bis 5 dargestellten Beispielen wie folgt:
Fig. 2: Zweimal zwei Reihen 30, B = 196 mm, M = 67 mm,

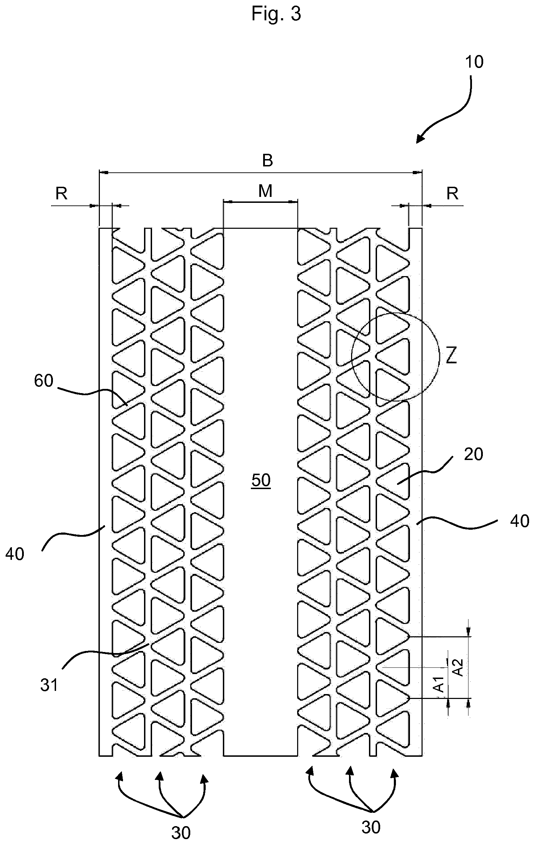

Fig. 3: Zweimal drei Reihen 30, B = 245 mm, M = 56,50 mm

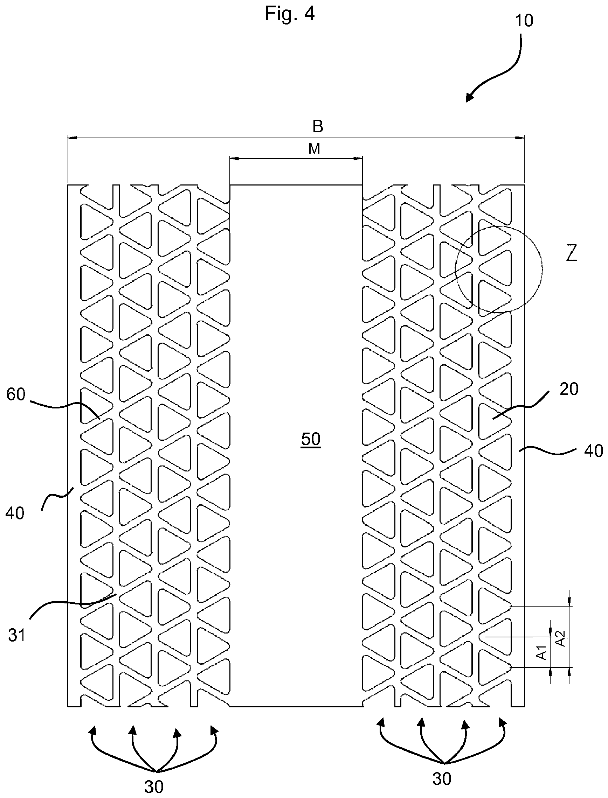

Fig. 4: Zweimal vier Reihen 30, B = 350 mm, M = 102 mm

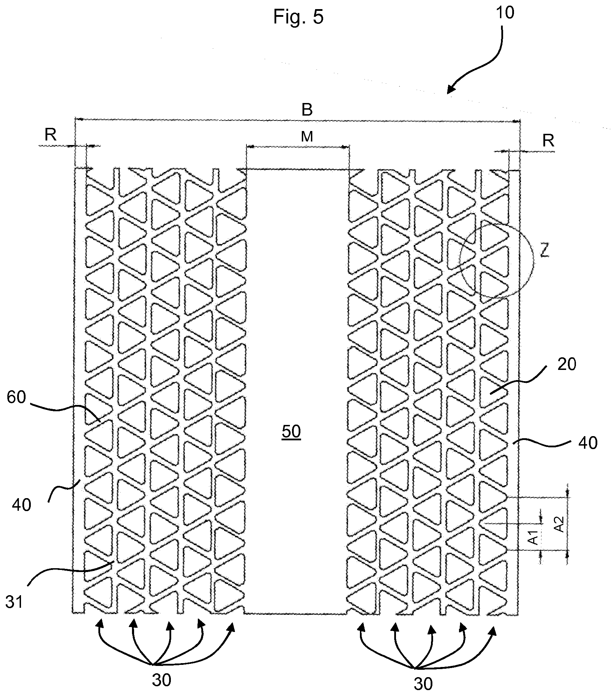

Fig. 5: Zweimal fünf Reihen 30, B = 400 mm, M = 92,50 mm

In allen gezeigten Ausführungsformen beträgt der Abstand A1 vorzugsweise 23,53 Millimeter und der Abstand A2 vorzugsweise 47,05 Millimeter.

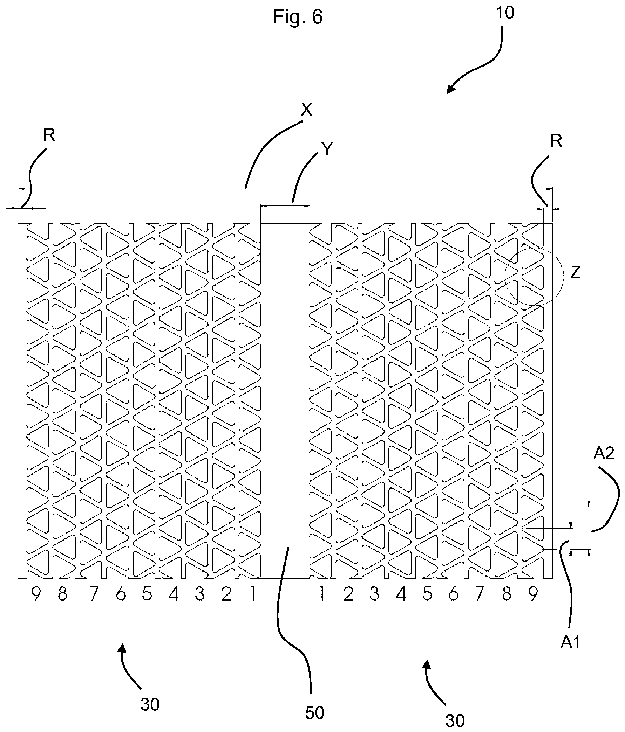

Fig. 6 stellt ein Aufbauschema dar, mit dem die konkreten Ausgestaltungen der in den Figuren 2 bis 5 dargestellten Eierbänder sowie weitere Eierbandbreiten bestimmt werden können.

In der folgenden Tabelle ist die Nennbreite der Eierbänder angegeben, die dem Wert X entspricht. Mit dem Maß Y ist die Breite des jeweils mittleren Streifens M bezeichnet. Die Angaben beziehen sich auf Ausnehmungen 20, die einen Kreis mit einem Durchmesser von 18,5 mm umschreiben. Für die verschiedenen Nennbreiten der Eierbänder ist angegeben, welche der mit von 1 bis 9 bezeichneten linken und rechten Reihen 30 jeweils als nicht gelocht ausgeführt werden, um die entsprechenden Eierbänder herzustellen. Ferner ist bei der Benennung angegeben, wie viele Reihen 30 von Dreieckslöchern das jeweilige Eierband der entsprechenden Nennbreite aufweist.

| Benennung | Maß X | Maß Y | nicht gelocht links | nicht gelocht rechts |
|---|---|---|---|---|
| Eierband 600 mm; | 600 mm | 54,5mm | 4,5 | 4,5 |
| 14 x Dreiecklock Dia 18,5mm | | | | |
| Eierband 500 mm; | 500 mm | 73,5mm | 3, 8, 9 | 3, 8, 9 |
| 12 x Dreiecklock Dia 1,8mm | | | | |
| Eierband 400 mm; | 400 mm | 92,5mm | 6, 7, 8, 9 | 6, 7, 8, 9 |
| 10 x Dreiecklock Dia 18,5mm | | | | |
| Eierband 350 mm; | 350 mm | 102mm | 5, 6, 7, 8, 9 | 5, 6, 7, 8, 9 |
| 8 x Dreiecklock Dia 18,5mm | | | | |
| Eierband 245 mm; | 245 mm | 56,5mm | 4, 5, 6, 7, 8, 9 | 4, 5, 6, 7, 8, 9 |
| 6 x Dreiecklock Dia 18,5mm | | | | |
| Eierband 196 mm; | 196 mm | 67mm | 3, 4, 5, 6, 7, 8, 9 | 3, 4, 5, 6, 7, 8, 9 |
| 4 x Dreiecklock Dia 18,5mm | | | | |

## Patentansprüche

1. Eierband (10) umfassend ein sich in einer Förderrichtung erstreckendes Band zum Fördern von Eiern in einer Förderrichtung und einer Vielzahl von Ausnehmungen bzw. Löchern (20), das Band einen oder mehrere Bereiche (40) ohne Ausnehmungen bzw. Löcher (20) aufweist, wobei einer oder beide der sich in Förderrichtung erstreckenden Ränder (40) des Bandes ohne Ausnehmungen bzw. Löcher (20) ausgebildet ist bzw. sind, wobei unter dem einen oder den mehreren Bereichen ohne Ausnehmungen bzw. Löcher zu verstehen ist, dass neben Stegen, die einzelne Ausnehmungen voneinander trennen, größere Bereiche des Bandes ohne Ausnehmungen ausgebildet sind, **dadurch gekennzeichnet, dass** die Ausnehmungen bzw. Löcher (20) dreiecksförmig ausgebildet sind, so dass ein Ei mit einem Abschnitt seiner Oberfläche in eine solche dreiecksförmige Ausnehmung eintaucht und dabei an drei Punkten, also jeweils einem Punkt pro Dreiecksseite, durch das Band gelagert wird, wobei die dreiecksförmigen Ausnehmungen bzw. Löcher (20) in zwei oder mehreren, sich in Förderrichtung erstreckenden Reihen (30) angeordnet sind, und die dreiecksförmigen Ausnehmungen einer Reihe durch Stege voneinander getrennt sind, die zur Förderrichtung in einem Winkel von 60° oder 120° ausgerichtet sind.

2. Eierband (10) nach dem vorhergehenden Anspruch,
**dadurch gekennzeichnet, dass** die Ausnehmungen bzw. Löcher (20) als gleichschenklige Dreiecke ausgebildet sind.

3. Eierband (10) nach einem der beiden vorhergehenden Ansprüche,
**dadurch gekennzeichnet, dass** die dreiecksförmigen Ausnehmungen bzw. Löcher (20) abgerundete Ecken aufweisen.

4. Eierband (10) nach einem der vorhergehenden Ansprüche,
**dadurch gekennzeichnet, dass** die dreiecksförmigen Ausnehmungen bzw. Löcher (20) jeweils einen Kreis mit einem Durchmesser von 15 bis 25 Millimeter, insbesondere 20 Millimeter, umschreiben.

5. Eierband (10) nach einem der vorhergehenden Ansprüche,
**dadurch gekennzeichnet, dass** die dreiecksförmigen Ausnehmungen bzw. Löcher (20) derart angeordnet sind, dass jeweils eine Seite einer Ausnehmung bzw. eines Lochs (20) parallel zur Förderrichtung ausgerichtet ist, wobei vorzugswese die jeweils anderen beiden Seiten einer Ausnehmung bzw. eines Lochs (20) in einem Winkel von 60° bzw. 120° zur Förderrichtung ausgerichtet sind.

6. Eierband (10) nach dem vorhergehenden Anspruch,
**dadurch gekennzeichnet, dass** die dreiecksförmigen Ausnehmungen bzw. Löcher einer Reihe abwechselnd um 60° gedreht angeordnet sind.

7. Eierband (10) nach einem der beiden vorhergehenden Ansprüche,
**dadurch gekennzeichnet, dass** die Reihen (30) durch sich in Förderrichtung erstreckende Stege (31) voneinander beabstandet sind, wobei die Stege (31) vorzugsweise eine Breite von weniger als 10 Millimeter haben, insbesondere eine Breite von 5 Millimetern.

8. Eierband (10) nach einem der vorhergehenden Ansprüche,
**dadurch gekennzeichnet, dass** die Stege (60. 60a,b) vorzugsweise eine Breite von weniger als 10 Millimeter haben, insbesondere eine Breite von 5 Millimetern.

9. Eierband (10) nach einem der vorhergehenden Ansprüche,
**dadurch gekennzeichnet, dass** eine mittlerer, streifenförmiger Bereich (50), der sich in Förderrichtung erstreckt, ohne Ausnehmungen bzw. Löcher (20) ausgebildet ist, wobei vorzugsweise
der mittlere Bereich (50) eine Breite aufweist, die der Breite von einer, zwei oder mehreren Reihen (30) von Ausnehmungen bzw. Löchern (20) entspricht.

10. Eierband (10) nach einem der vorhergehenden Ansprüche,
**dadurch gekennzeichnet, dass** der Rand bzw. die Ränder (40) ohne Ausnehmungen bzw. Löcher (20) eine Breite (R) aufweist bzw. aufweisen, die kleiner ist als eine Seitenlänge einer dreiecksförmigen Ausnehmung bzw. eines dreiecksförmigen Lochs ( 20), vorzugsweise beträgt die Breite 10 Millimeter.

11. Eierband (10) nach einem der vorhergehenden Ansprüche,
**dadurch gekennzeichnet, dass** mindestens ein Ende des Bandes eine Kante aufweist, die zur Förderrichtung in einem Winkel von 60° oder 120° ausgerichtet ist.

12. Eierband (10) nach einem der vorhergehenden Ansprüche,
**dadurch gekennzeichnet, dass** das Eierband (10) Kunststoff, vorzugsweise ein Thermoplast, insbesondere Polypropylen, aufweist oder daraus besteht, und/oder im Extrusionsverfahren hergestellt ist.

## Claims

1. An egg belt (10), comprising a belt extending in a conveying direction for conveying eggs in a conveying direction and having a plurality of recesses or holes (20),
the belt has one or more areas (40) without recesses or holes (20), wherein one or both of the belt borders extending in the conveying direction is/are formed without recesses or holes (20),
wherein the one or more areas (40) without recesses or holes (20) is to be understood to mean that in addition to webs separating individual recesses from each other, there are also larger regions of the belt which do not have recesses,
**characterized in that** the recesses or holes (20) are triangular in shape, so that an egg dips into such a triangular recess with a portion of its surface and is supported by the belt at three points, that is to say at one point per side of the triangle, wherein the triangular recesses or holes (20) are arranged in two or more rows (30) extending in the conveying direction and
the triangular recesses in a row are separated from each other by webs which are oriented at an angle of 60° or 120° to the conveying direction.

2. The egg belt (10) according to the preceding claim,
**characterized in that** the recesses or holes (20) are in the shape of isosceles triangles.

3. The egg belt (10) according to any one of the two preceding claims,
**characterized in that** the triangular recesses or holes (20) have rounded corners.

4. The egg belt (10) according to any one of the preceding claims,
**characterized in that** the triangular recesses or holes (20) each circumscribe a circle having a diameter of between 15 and 25 millimeters, in particular 20 millimeters.

5. The egg belt (10) according to any one of the preceding claims,
**characterized in that** the triangular recesses or holes (20) are arranged such that one side of each recess or of each hole (20) is aligned parallel to the conveying direction, the other two respective sides of each recess or of each hole (20) preferably being oriented at an angle of 60° and 120° to the conveying direction.

6. The egg belt (10) according to the preceding claim,
**characterized in that** the triangular recesses or holes in a row are alternately rotated by 60°.

7. The egg belt (10) according to any one of the two preceding claims,
**characterized in that** the rows (30) are spaced apart from each other by webs (31) extending in the conveying direction, said webs (31) preferably having a width of less than 10 millimeters, in particular a width of 5 millimeters.

8. The egg belt (10) according to any one of the preceding claims,
**characterized in that** the webs (60. 60a,b) preferably have a width of less than 10 millimeters, in particular a width of 5 millimeters.

9. The egg belt (10) according to any one of the preceding claims,
**characterized in that** a middle, strip-shaped area (50) extending in the conveying direction is formed without recesses or holes (20),
said middle area (50) preferably having a width equal to the width of one, two or several rows (30) of recesses or holes (20).

10. The egg belt (10) according to any one of the preceding claims,
**characterized in that** the edge(s) (40) without recesses or holes (20) has/have a width (R) which is less than the length of one side of a triangular recess or of a triangular hole (20), the width preferably being 10 millimeters.

11. The egg belt (10) according to any one of the preceding claims,
**characterized in that** at least one end of the belt has an edge which is oriented at an angle of 60° or 120° to the conveying direction.

12. The egg belt (10) according to any one of the preceding claims,
**characterized in that** the egg belt (10) comprises or consists of plastic, preferably a thermoplastic, in particular polypropylene, and/or is produced by an extrusion process.

## Revendications

1. Tapis à oeufs (10) comprenant un tapis s'étendant dans un sens de transport pour transporter des oeufs dans un sens de transport et une pluralité d'évidements ou de trous (20),
le tapis présente une ou plusieurs zones (40) sans évidements ou trous (20), dans lequel un ou les deux bords (40) du tapis s'étendant dans le sens de transport est réalisé ou sont réalisés sans évidements ou trous (20), dans lequel il faut entendre par l'une ou les plusieurs zones sans évidements ou trous que, outre des traverses, qui séparent l'un de l'autre différents évidements, des zones plus grandes du tapis sont réalisées sans évidements,
**caractérisé en ce que** les évidements ou trous (20) sont réalisés de manière triangulaire, de sorte qu'un oeuf plonge avec une section de sa surface dans un tel évidement triangulaire et est logé ce faisant en trois points, donc respectivement un point par côté du triangle, par le tapis, dans lequel les évidements ou trous (20) triangulaires sont agencés en deux ou plusieurs rangées (30) s'étendant dans le sens de transport, et
les évidements triangulaires d'une rangée sont séparés les uns des autres par des traverses, qui sont orientées selon un angle de 60° ou 120° par rapport au sens de transport.

2. Tapis à oeufs (10) selon la revendication précédente,
**caractérisé en ce que** les évidements ou trous (20) sont réalisés sous forme de triangles isocèles.

3. Tapis à oeufs (10) selon l'une des deux revendications précédentes,
**caractérisé en ce que** les évidements ou trous (20) triangulaires présentent des coins arrondis.

4. Tapis à oeufs (10) selon l'une quelconque des revendications précédentes,
**caractérisé en ce que** les évidements ou trous (20) triangulaires circonscrivent respectivement un cercle d'un diamètre de 15 à 25 millimètres, en particulier de 20 millimètres.

5. Tapis à oeufs (10) selon l'une quelconque des revendications précédentes,
**caractérisé en ce que** les évidements ou trous (20) triangulaires sont agencés de telle sorte que respectivement un côté d'un évidement ou d'un trou (20) est orienté parallèlement au sens de transport, dans lequel de préférence les respectivement deux autres côtés d'un évidement ou d'un trou (20) sont orientés selon un angle de 60° ou 120° par rapport au sens de transport.

6. Tapis à oeufs (10) selon la revendication précédente,
**caractérisé en ce que** les évidements ou trous triangulaires d'une rangée sont agencés tournés alternativement de 60°.

7. Tapis à oeufs (10) selon l'une des deux revendications précédentes,
**caractérisé en ce que** les rangées (30) sont espacées les unes des autres par des traverses (31) s'étendant dans le sens de transport, dans lequel les traverses (31) ont de préférence une largeur de moins de 10 millimètres, en particulier une largeur de 5 millimètres.

8. Tapis à oeufs (10) selon l'une quelconque des revendications précédentes,
**caractérisé en ce que** les traverses (60, 60a,b) ont de préférence une largeur de moins de 10 millimètres, en particulier une largeur de 5 millimètres.

9. Tapis à oeufs (10) selon l'une quelconque des revendications précédentes,
**caractérisé en ce qu'**une zone médiane (50) en forme de bande, qui s'étend dans le sens de transport, est réalisée sans évidements ou trous (20), dans lequel de préférence la zone médiane (50) présente une largeur, qui correspond à la largeur d'une, deux ou plusieurs rangées (30) d'évidements ou de trous (20).

10. Tapis à oeufs (10) selon l'une quelconque des revendications précédentes,
**caractérisé en ce que** le bord ou les bords (40) sans évidements ou trous (20) présente ou présentent une largeur (R), qui est inférieure à une longueur du côté d'un évidement triangulaire ou d'un trou triangulaire (20), de préférence la largeur est de 10 millimètres.

11. Tapis à oeufs (10) selon l'une quelconque des revendications précédentes, **caractérisé en ce qu'**au moins une extrémité du tapis présente une arête, qui est orientée selon un angle de 60° ou 120° par rapport au sens de transport.

12. Tapis à oeufs (10) selon l'une quelconque des revendications précédentes,
**caractérisé en ce que** le tapis à oeufs (10) présente une matière synthétique, de préférence un thermoplastique, en particulier du polypropylène, ou en est composé, et/ou est fabriqué selon un procédé d'extrusion.
